# EUROPEAN PATENT APPLICATION

(11) **EP 3 498 910 A1**
(43) Date of publication of application: **19.06.2019**
(21) Application number: 17207222.5
(22) Date of filing: 14.12.2017
(51) Int. Cl.: D06M 13/513, D06M 13/256, D06M 13/262, D06M 13/224, D06M 13/17, D06M 13/188, D06M 13/192, D06M 11/79, C08J 3/03, D06M 101/20, D06M 101/32, D06M 101/34

(54) **SUPERHYDROPHOBIC COATINGS FOR THE TREATMENT OF TEXTILES**

(71) Applicant: Henkel IP & Holding GmbH, 40589 Düsseldorf (DE)
(72) Inventor: PHELAN, Marisa, Dublin, 9 (IE); GOFF, Ciara, Enniscorthy (IE); WARD, Mary Bernadette, Dublin, 7 (IE); THAI, Michael, Dublin, 13 (IE)
(74) Representative: Henkel IP Department

(57) **Abstract**

The present invention relates to aqueous silane emulsions based on specific hydrolysable silanes anionic and non-ionic surfactants, a textile comprising a coating obtainable by impregnating the textile with the aqueous silane emulsion according to the present invention and the use of the aqueous silane emulsion according to the present invention for treating textiles. Moreover, the invention also encompasses a method of impregnating a textile with the aqueous silane emulsion according to the present invention as obtained via dilution from a concentrated system.

## Description

The present invention relates to aqueous silane emulsions based on specific hydrolysable silanes, anionic and non-ionic surfactants, a textile comprising a coating obtainable by impregnating the textile with the aqueous silane emulsion according to the present invention and the use of the aqueous silane emulsion according to the present invention for treating textiles. Moreover, the invention also encompasses a method of impregnating a textile with the aqueous silane emulsion according to the present invention.

For the last forty years, the textile clothing industry has used one predominant technology type or chemistry coating to impart water repellency and oil repellency to certain clothing types (outdoor clothing lines, school uniforms, certain high street lines). Over the last number of years' environmental concerns have arisen around the use of these chemicals (perfluorocarbons - PFCs) to make clothing "waterproof" and "water repellent" owing to the environmental concerns and potential impact to human health. Owing to this, the textile industry is transitioning away from using these chemicals. However, in doing so some of the performance claims on some clothing lines may need to be dropped. Most incumbents in this sector have developed fluorine free alternatives, however some of these materials fail to meet all the performance requirements previously achieved by PFCs, particularly on some of the more challenging textile substrates.

For example WO 2014/139931 A1 discloses an application method of enhancing the water repellence of a textile and/or enhancing a textile's ability to repel water soluble dirt, comprising the steps of:
a) applying an emulsified liquid composition on a textile, wherein said emulsified liquid composition consists of:
   - Water
   - Alkylalkoxysilane with said alkyl chain having a length of 10-30 carbons or carbon atoms higher than 12 but equal to or less than 18
   - at least one emulsifier, surfactant, thickener and/ or stabilizer
   - a water soluble acid catalyst and
   - unavoidable impurities
b) optionally adding to the composition amino silicones for softness and durability enhancement of the water repellency
c) optionally adjusting the amount of the composition applied on textile
d) drying the treated textile until dry
e) curing the treated textile at a temperature of between 100-200°C.
f) optionally removing the non-reacted composition residue from the treated textile by washing with water and optionally redrying the treated textile.

In addition WO 2016/000830 A1 discloses a composition, comprising at least components (A) and (B) and optionally at least one of components (C) to (E): (A) polyacrylate obtained in the polymerization of components (M1) CH₂=CR₃COOR¹ with (M2) CH₂=CR₃COOR² and optionally (M3) CH₂=CR₃-X-R⁴ (B) wax (C) blocked isocyanate (D) organic polysiloxane; (E) melamine resin; wherein R¹ is a residue containing from 1 to 8 carbon atoms; R² is a residue containing from 9 to 40 carbon atoms; R³ = H, CH₃, C₂H₅; X = COO, CONH; R⁴ = glycidyl or CH₂(CH₂)ₙ-OR⁵, wherein n is an integer in the range of from 1-10 and R⁵ is H or a residue containing from 1 to 6 carbon atoms; and wherein the composition is based on water and/or an organic solvent and is fluorine-free.

Furthermore, WO 2016/000829 A1 describes a composition, comprising a first component (I) comprising a polyacrylate (A1) and a wax (B), and a second component (II) comprising a polyacrylate (A2), wherein polyacrylate (A1) comprises moieties derived from (meth)acrylic acid ester monomers (M1) and (M2), and optionally (M3),

(M1) CH₂=CR³COO-R¹

(M2) CH₂=CR³COO-R²

(M3) CH₂=CR³-X-R⁴;

wherein R¹ is the alcohol moiety in monomer (M1) containing from 1 to 8 carbon atoms; R² is the alcohol moiety in monomer (M2) containing from 9 to 40 carbon atoms; R³ is independently selected from H, CH₃ or C₂H₅; X is COO or CONH; R⁴ is glycidyl or CH₂(CH₂)n-OR⁵, wherein n is an integer in the range of from 1 to 10 and R⁵ is H or a residue containing from 1 to 6 carbon atoms; and polyacrylate (A2) is a fluorine-containing polyacrylate; wherein the composition is based on water and/or an organic solvent.

However, most of the commercially available textile coatings are not long lasting and diminish significantly after 10 laundry cycles, giving a lowered spray rating, as determined according to the DIN EN ISO 4920:2012-12 standard. In some cases, spray ratings of 70 or below are obtained, which is undesirable.

Consequently, a need still exists in the art for improved textile coatings which overcomes at least some of the drawbacks of known coatings.

The present invention described herein solves some of the known issues by aqueous silane emulsions based on specific hydrolysable silanes and anionic surfactants.

In the following, aqueous silane emulsion(s) are also generally referred to as "emulsion(s)".

The present invention pertains in a first embodiment to an aqueous silane emulsion, comprising
a) at least one hydrolysable silane having the general formula (I):

   R¹-Si-(OR²)₃ (I),

   wherein
   R¹ is an C₂-C₁₂, preferably C₄-C₁₀, more preferably C₇-C₉, most preferably Cs, alkyl group which can be optionally substituted with one or more groups independently selected from F, Cl, Br, I or OH, preferably it is unsubstituted; and
   R² is independently selected from an C₁-C₈, preferably C₁-C₄, more preferably C₂, alkyl group which can be optionally substituted with one or more groups independently selected from F, Cl, Br, I or OH, preferably it is unsubstituted;
b) at least one anionic surfactant, preferably having an HLBd value of 1 to 40, preferably 18 to 40, most preferably 40, most preferably which comprises or is sodium lauryl sulfate;
c) optionally at least one non-ionic surfactant, preferably having an HLBg value of 1 to 20, more preferably 2 to 10;
d) optionally at least one acid;
e) optionally at least one additive; and
f) the remainder being water; wherein
preferably the sum of a) to f) is 100 wt.-%.

The surfactants are selected in accordance with their hydrophobic-lipophilic balances (HLB). Presently, there are two established methods for HLB determination (a) the Griffins method for non-ionic surfactants (range 0 to 20) and (b) the Davies method for anionic surfactants (range 0 to 40). The values are determined according to Griffin W C: "Calculation of HLB Values of Non-Ionic Surfactants," Journal of the Society of Cosmetic Chemists 5 (1954): 249; and Davies J T: "A quantitative kinetic theory of emulsion type, I. Physical chemistry of the emulsifying agent," Gas/Liquid and Liquid/Liquid Interface. Proceedings of the International Congress of Surface Activity (1957): 426-438. In the present invention, Griffin HLB values are noted as HLBg and Davies HLB values are noted as HLBd.

In addition, the present invention in a second embodiment relates to a textile comprising a coating obtainable by impregnating the textile with the aqueous silane emulsion according to the present invention.

Furthermore, in a third embodiment the present invention pertains to the use of the aqueous silane emulsion according to the present invention for treating textiles, preferably polyamide, polypropylene or polyester textiles, more preferably polyester textiles, to obtain a water repellent coating on the textiles.

Moreover, in a fourth embodiment a method of impregnating a textile, preferably a polyamide, polypropylene or polyester textile, more preferably a polyester textile, with an aqueous silane emulsion according to the present invention, comprising the steps:
i) applying the aqueous silane emulsion via Pad application (e.g., Foulard) onto the textile;
ii) curing the treated textile obtained in step i) is claimed.

Further preferred embodiments are set out in the dependent claims.

In a preferred embodiment, the emulsion according to the present invention contains less than 0.5 wt.-%, preferably less than 0.1 wt.-%, more preferably 0.01 wt.-%, perfluorocarbons, based on the total weight of the emulsion. Most preferably, the emulsion according to the present invention is free from perfluorocarbons.

In a preferred embodiment, the aqueous silane emulsion of the present invention (as applied to textiles) comprises at least 70 wt.-%, preferably at least 80 wt.-%, more preferably at least 90 wt.-%, of water, based on the total weight of the emulsion. In a further preferred embodiment 70 to 90 wt.-%, more preferably 88 to 90 wt.-% of water is present, based on the total weight of the emulsion.

In a preferred embodiment, the emulsion according to the invention is an oil in water emulsion having an average droplet size of 10 to 150 nm, preferably 30 to 60 nm. The droplet size is determined via dynamic light scattering. It has been found that when a droplet size in this range is obtained the emulsions have longevity of stability over time.

In a preferred embodiment, the aqueous silane emulsion according to the invention has a pH-value of from 1 to 6.9, preferably 2 to 6, more preferably 3 to 5.8.

The emulsion contains at least one hydrolysable silane having the general formula (I)

R¹-Si-(OR²)₃ (I),

wherein
R¹ is an C₂-C₁₂, preferably C₄-C₁₀, more preferably C₇-C₉, most preferably Cs, alkyl group which can be optionally substituted with one or more groups independently selected from F, Cl, Br, I or OH, preferably it is unsubstituted; and
R² is independently selected from an C₁-C₈, preferably C₁-C₄, more preferably C₂, alkyl group which can be optionally substituted with one or more groups independently selected from F, Cl, Br, I or OH, preferably it is unsubstituted.

In a preferred embodiment, the hydrolysable silane according to the present invention has a molecular weight of 100 to 600 g/mol, preferably of 150 to 400 g/mol, more preferably 250 to 300 g/mol.

Specific examples of hydrolysable silanes useful according to the present invention include, but are not limited to, methyltrimethoxysilane, methyltriethoxysilane, methyltri-n-propoxysilane, ethyltrimethoxysilane, ethyltriethoxysilane, ethyltri-n-propoxysilane, propyltriethoxysilane, propyltri-n-propoxysilane, butyltrimethoxysilane, butyltriethoxysilane, isobutyltrimethoxysilane, isobutyltriethoxysilane, n-hexyltrimethoxysilane, 6-chloro-hexyltrimethoxysilane, 6,6,6-triflurohexyltrimethoxysilane, cyclohexyltrimethoxysilane, octyltrimethoxysilane, octyltriethoxysilane, octyltriisopropoxysilane, 2-ethylhexyltrimethoxysilane, decyltrimethoxysilane, dodecyltrimethoxysilane, or mixtures thereof . In a more preferred embodiment the hydrolysable silane according to the present invention comprises octyltriethoxysilane, in an even more preferred embodiment it is octyltriethoxysilane.

In a preferred embodiment, at least one hydrolysable silane is present in 2 to 10 wt.-%, preferably 5 to 6 wt.-%, based on the total weight of the aqueous silane emulsion. In a further preferred embodiment, the at least one hydrolysable silane is present in 2 to 10 wt.-%, preferably 5 to 6 wt.-%, based on the total weight of the aqueous silane emulsion and comprises octyltriethoxysilane, more preferred is octyltriethoxysilane.

The emulsion comprises at least one anionic surfactant b), preferably having an HLBd value of 1 to 40, more preferably 18 to 40, most preferably 40. In general, the literature suggests nonionic surfactants having an HLBg value of from 1-20. However, it has been surprisingly found that emulsions comprising the specific hydrolizable silane compound a) according to the present invention show best stability with anionic surfactants having an HLBd values of at least 13, more preferably even higher.

Exemplary suitable anionic surfactants are alkali metal sulfosuccinates; sulfonated glyceryl esters of fatty acids such as sulfonated monoglycerides of coconut oil acids; salts of sulfonated monovalent alcohol esters such as sodium oleyl isothionate; amides of amino sulfonic acids such as the sodium salt of oleyl isothionate; amides of amino sulfonic acids such as the sodium salt of oleyl methyl tauride; sulfonated products of fatty acid nitriles such as palmitonitrile sulfonate; sulfonated aromatic hydrocarbons such as sodium alpha-naphthalene monosulfonate; condensation products of naphthalene sulfonic acids with formaldehyde, sodium octahydro anthracene sulfonate; alkali metal alkyl sulfates having alkyl groups of 8 to 30, preferably 8 to 18 carbon atoms; ether sulfates having alkyl groups of 8 to 30, preferably 8 to 18 carbon atoms; and alkylaryl sulfonates having one or more alkyl groups of 8 to 30 carbon atoms. In a preferred embodiment said at least one anionic surfactant comprises a sulfate group, more preferably is selected from alkali metal alkyl sulfates having alkyl groups of 8 to 30, preferably 8 to 18 carbon atoms; most preferably is an alkali metal alkyl sulfate having an alkyl group with 8 to 16 carbon atoms. In a further preferred embodiment, the at least one anionic surfactant comprises, more preferably consists of sodium lauryl sulfate.

In a preferred embodiment, the at least one anionic surfactant is present in 0.01 to 0.2 wt.-%, preferably 0.02 to 0.2 wt.-%, more preferably 0.025 to 0.2 wt.-%, based on the total weight of the aqueous silane emulsion. In a further preferred embodiment, the anionic surfactant is present in 0.01 to 0.2 wt.-%, preferably 0.02 to 0.2 wt.-%, more preferably 0.025 to 0.2 wt.-%, based on the total weight of the aqueous silane emulsion and comprises sodium lauryl sulfate, more preferred is sodium lauryl sulfate. In most preferred embodiments, the amount of anionic surfactant, preferably sodium lauryl sulfate, is 0.2 wt.-% or less, preferably between >0.01 and 0.2 wt.-% or 0.025 and 0.2 wt.-%, based on the total weight of the aqueous silane emulsion.

The emulsion of the present invention can further comprise at least one non-ionic surfactant c), preferably having an HLBg value of 1-20, more preferably 2-10. It has been found that a combination of the specific anionic and nonionic surfactant of the present invention facilitates the creation of a stable emulsified system that allows performance directly after coating application.

Exemplary suitable non-ionic surfactants are alkoxylated fatty alcohols, alkyl glycosides, alkoxylated fatty acid alkyl esters, fatty acid alkanol amides, hydroxyl mixed ethers, polyhydroxy fatty acid amides, triglycerides, sorbitan esters, sorbitan mono-, di- and triglycerides and alkoxylated sorbitol esters. In a preferred embodiment the at least one nonionic surfactant is selected from sorbitan esters, mono-, di- and triglycerides, and polyoxyethylene sorbitan esters, such as, without limitation, sorbitan monostearate, sorbitan distearate, sorbitan tristearate, sorbitan monolaurate, sorbitan dilaurate, sorbitan trilaurate, sorbitan monopalmitate, sorbitan dipalmitate, sorbitan tripalmitate, sorbitan monomyristate, sorbitan dimyristate, sorbitan trimyristate, sorbitan monooleate, sorbitan dioleate, sorbitan trioleate, sorbitan esters with mixed C₁₂₋₁₈ fatty acids and polyoxyethylene variants of the afore-mentioned sorbitan esters. Preferred is, inter alia, sorbitan tristearate. Commercially available compounds include, without limitation, Span 60, Span 65, Span 20 and Tween 60 available from Croda.

In a preferred embodiment the at least one nonionic surfactant is present in 0.01 to 1.0 wt.-%, preferably 0.02 to 0.5 wt.-%, more preferably 0.1 to 0.5 wt.-%, based on the total weight of the aqueous silane emulsion.

The emulsion of the present invention can optionally further comprise at least one acid d), preferably the at least one acid is an organic acid, more preferably having a pKa of 1.3-5.0. Suitable exemplarily acids are preferably selected from acetic acid, para-toluenesulfonic acid, benzenesulfonic acid, camphorsulfonic acid, malic acid, maleic acid, glyoxylic acid, citric acid, formic acid, pyruvic acid, tartaric acid, phthalic acid, acetylsalicylic acid, salicylic acid, lactic acid, dihydroxy fumaric acid, mandelic acid, malonic acid, glycolic acid and oxalic acid or combinations thereof, more preferably the at least one organic acid comprises malic acid or acetic acid or a combination thereof, more preferred is acetic acid.

In a preferred embodiment, the at least one acid is present in 0.5 to 1.5 wt.-%, preferably 1 to 1.5 wt.-%, most preferably 1 wt.-%, based on the total weight of the aqueous silane emulsion. In a further preferred embodiment, the at least one organic acid is present in 0.5 to 1.5 wt.-%, preferably 1 to 1.5 wt.-%, most preferably 1 wt.-%, based on the total weight of the aqueous silane emulsion, more preferably the at least one organic acid comprises malic acid or acetic acid or a combination thereof, more preferred is acetic acid.

In a preferred embodiment, the emulsion according to the present invention can optionally comprise at least one further additive e). In a more preferred embodiment the at least one further additive is selected from defoamers, buffering agents like sodium bicarbonate; amino silicones, wetting agents, crosslinking agents, extenders or combinations thereof. In a preferred embodiment the at least one additive is present in 0.1 to 2.5 wt.-%, preferably 0.1 to 2 wt.-%, more preferably in 0.1 to 1.8 wt.-%, based on the total weight of the aqueous silane emulsion. In a more preferred embodiment the emulsion according to the present invention comprises at least one defoamer, preferably in 0.01 to 0.5 wt.-% based on the total weight of the aqueous silane emulsion. Defoamers are known to the skilled person and any kind can be employed as long as they do not detrimentally influence the emulsion. Particularly suitable defoamers are based on vegetable oil, for example Tego® Antifoam KS53 which is commercially available from Evonik. In a further preferred embodiment, the emulsion according to the present invention comprises at least one crosslinking agent or extender, preferably in 1.0 to 2.0 wt.-%, more preferably 1.5 wt.-%. Crosslinking agents are known to the skilled person and any kind can be employed as long as they do not detrimentally influence the emulsion. Particularly suitable crosslinking agents are condensation products of fatty acid/melamine commercially available from Tanatex under the tradename Baygard, Edolan also provided by Tanatex and the Tegomer range as offered by Evonik. In a preferred embodiment, the emulsion comprises at least one wetting agent.

The emulsions of the present invention can be prepared as concentrates and diluted with water before use. The respective concentrates can be at least 2-fold, preferably at least 3 or 4-fold, for example 8-fold or up to 10-fold concentrated. This means that the concentrations of the active components are at least twice or more of those indicated above and the amount of water is decreased accordingly. In such concentrates the concentration of the silane component can thus be 2- to 10-fold higher than indicated above, typically between 10 and 40 wt.-%, preferably between 18 and 40 wt.-%, relative to the total weight of the concentrate. The same applies to all other components, for example the anionic and the non-ionic surfactants. For example, the anionic surfactant can be present in 0.02 to 2.0 wt.-%, preferably 0.04 to 2.0 wt.-%, more preferably 0.05 to 2.0 wt.-% based on the total weight of the concentrate. In a preferred embodiment, a concentrate emulsion of the present invention comprises at least 40 wt.-%, preferably at least 60 wt.-%, of water, based on the total weight of the emulsion. In a further preferred embodiment 50 to 70 wt.-%, more preferably 55 to 58 wt.-% of water is present, based on the total weight of the concentrate emulsion. In a preferred embodiment the concentrate emulsion according to the invention has a pH-value of from 1 to 7.5, preferably 2 to 7, more preferably 6 to 7. In a preferred embodiment the non-ionic surfactant is present in the concentrate in amounts of 0.2 to 2.8 wt.-%, preferably 0.3 to 2.8 wt.-%, more preferably 0.35 to 2.8 wt.-%, based on the total weight of the concentrate emulsion.

The emulsions of the present invention can be employed to impregnate textiles, especially under industry standards pad application more commonly known as "Foulard application", in order to obtain coatings which, confer water repellent characteristics to the treated fabrics. The emulsion according to the present invention is used for treating textiles, preferably polyamide, polypropylene or polyester textiles, more preferably polyester textiles, to obtain a water repellent coating on the textiles.

In a preferred embodiment, the coating obtained on the textile endures longer than 10, preferably 20 laundry cycles, preferably having a spraying rate of at least 70 (ISO 2), preferably 80 (ISO 3), more preferably 90 (ISO 4) after the last cycle. The spraying rate is determined according to DIN EN ISO 4920:2012-12. For this test three samples of the finished textiles sized minimum 180mm x 180mm are tested using a spray tester and a water volume of 250 mL de-ionised water. After spraying, the residual water is tapped off the surface and the sample is scored using the spray test rating standard.

Commonly known impregnation techniques can be employed in order to achieve the coating of the textile.

In particular the present invention provides a method of impregnating a textile, preferably a polyamide, polypropylene or polyester textile, more preferably a polyester textile, with an aqueous silane emulsion according to the present invention, comprising the steps:
i) applying the aqueous silane emulsion via pad application onto the textile;
ii) curing the treated textile obtained in step i).

In a preferred embodiment, the application speed of step i) is 0.5 m/min to 40 m/min, preferably 1m/min to 30m/min, in commercial applications typically 20-30 m/min, and/or the pressure used to apply the aqueous silane emulsion is 1 to 6 bar, preferably 1.5 to 3.5 bar.

In a further preferred embodiment, the curing temperature of step ii) is 130 to 170 °C, preferably 150 to 160°C.

In the following examples are presented to illustrate the present invention. However, the present invention is not limited to those examples.

### Examples

C8 = Octyltriethoxysilane
SLS = Sodium lauryl sulfate
Water = Deionized water

Table 1 shows stable exemplarily compositions according to the present invention. The emulsions can be obtained by mixing the components with a homogenizer. The samples were aged over a period of 6 months at room temperature and exhibited little evidence of phase separation.

**Table 1: Amounts are in wt.-%, wherein the sum is 100 wt.-%**

| Example | Water | C8 | SLS | Observation |
|---|---|---|---|---|
| 1 | 89.5 | 10 | 0.5 | Milky while emulsion |
| 2 | 89 | 10 | 1 | Milky while emulsion |
| 3 | 89.9 | 10 | 0.1 | Milky while emulsion |
| 4 | 89.95 | 10 | 0.05 | Milky while emulsion |

Table 2 shows a series of formulations that were prepared to investigate the influence of surfactant levels on stability and droplet size with increasing C8 levels. The droplet size of the formulations was measured by DLS (dynamic light scattering) at 90°

**Table 2: Amounts are wt.-%, wherein the sum is 100 wt.-%**

| Example | C8 | SLS | Water | DLS 90° | pH | Observation |
|---|---|---|---|---|---|---|
| 5 | 0 | 0.05 | 95.95 | 207.4 | 5.4 | unstable |
| 6 | 5 | 0.12 | 94.88 | 88.7 | 4.2 | Stable |
| 7 | 7 | 0.07 | 92.93 | 70.2 | 3.5 | Stable |
| 8 | 7 | 0.10 | 92.9 | 53.7 | 3.2 | Stable |
| 9 | 20 | 0.05 | 79.95 | 23 | 4.5 | Slight layering |
| 10 | 20 | 0.5 | 79.5 | 13.7 | 4.0 | Stable |

Example 5 is a Comparative Example

The data displayed in Table 2 shows the appropriate balance of surfactant to organosilane to ensure a stabilized emulsified system. As the level of C8 increases, it can be seen that the level of surfactant also need to increase to ensure stability is possible. Moreover, the droplet size correlating to stability is within the range of 10-150 nm.

Below Table 3 shows performance tests with emulsified systems according to the present invention comprising organic acids which were applied via Pad application to two types of polyester.
Blue = woven polyester (120gsm)
White = knitted polyester
Testing Conditions:
   Pad coating speed 0.6m/min and emulsion pressure 3.5 bar White Polyester
   Pad coating speed 5m/min and 1.5 bar Rotofil 51
   Stent curing of 5 mins @ 150°C
Samples were then allowed to equilibrate at room temperature for a period of 24 hours before performance testing was conducted. Performance testing was conducted in accordance the "Spray test" as above-mentioned according to DIN EN ISO 4920:2012-12.

**Table 3: Amounts are in wt.-%, wherein the sum is 100 wt.-%, except for values of the spray test.**

| | | | | | | | | Spray Test Results after Laundry Cycles @ 40 °C | | | | |
|---|---|---|---|---|---|---|---|---|---|---|---|---|
| Example | C8 | SLS | Water | Malic Acid | Acetic Acid | pH | Fabric | 0 | 1 | 5 | 10 | 20 |
| 11 | 2 | 0.05 | 95.44 | 2.5 | - | 1.6 | White | 0 | 80 | 80 | 80 | 80 |
| 12 | 5 | 0.05 | 91.45 | 3.5 | - | 1.9 | White | 80 | 80 | 80 | 80 | 80 |
| | 5 | 0.05 | 91.45 | 3.5 | - | 1.9 | Blue | 70 | 70 | 70 | 70 | 50 |
| 13 | 5 | 0.05 | 94.7 | - | 0.25 | 2.2 | White | 80 | 80 | 90 | 80 | 80 |
| | 5 | 0.05 | 94.7 | - | 0.25 | 2.2 | Blue | 0 | 80 | 70 | 70 | 70 |
| 14 | 7 | 0.05 | 92.7 | - | 0.25 | 2.2 | White | 80 | 90 | 80 | 90 | 80 |
| | 7 | 0.05 | 92.7 | - | 0.25 | 2.2 | Blue | 0 | 70 | 70 | 70 | 70 |
| | | | | | | | White | 100 | 100 | 100 | 100 | 75 |
| - | Huntsman Phobol CP-C | | | | | | Blue | 100 | 100 | 90 | 90 | 70 |
| | | | | | | | White | 100 | 100 | 100 | 100 | 90 |
| - | Archroma SmartRepel Hydro PM | | | | | | Blue | 80 | 90 | 100 | 90 | 90 |

Huntsman Phobol CP-C is comprised of a fluorinated acrylate polymer, i.e. is PFC based. Archroma SmartRepel Hydro PM is a fluorine free composition and is similar in composition to the formulas claimed in WO 2016/000829 A1.

Compositions of the present invention were scaled up and manufactured at a Pilot level to ensure that stability could be achieved when moving from lab to larger scale.

An emulsion was prepared on a batch scale as a concentrate having the following composition

**Table 4: Exemplary composition**

| Components | Wt.-% |
|---|---|
| C8 | 20 |
| SLS | 1 |
| Deionised Water | 78.2 |
| Defoamer | 0.3 |
| Sodium Bicarbonate | 0.5 |
| | 100 |

### Preparation:

Vessel was charged with the deionized water, followed by the SLS, (C8) octyltriethoxysilane, defoamer and sodium bicarbonate. This was pre-homogenized for 30 minutes at room temperature. The pre-mix was added to the Ystral mixer and mixed for 10 minutes at 8000 rpm. The composition displayed in Table 4 was subsequently tested on a range of fabric types using various application conditions including Pad Speed, Pressure and curing temperatures.

### Up-Formulation for coating application:

The concentrate, as displayed in Table 4, was further up-formulated prior to application. Table 5 shows the formulation set that was prepared and subsequently coated and tested on Polypropylene (Table 6), Polyamide (Table 7) and polyester (Table 8).

**Table 5**

| Components | Wt.-% |
|---|---|
| Concentrate Table 4 | 25 |
| Extender | 1.5 |
| Acetic Acid | 1.0 |
| Deionised Water | 72.5 |

Table 6 shows performance tests with emulsions according, as formulated in Table 5, to the present invention comprising organic acids and Baygard 40178, the extender, which were applied via Pad Application on polypropylene. The cure time was always 300 seconds, the cure temperature 110 °C, pad application speed of 5 m/min and a pad application pressure of 1.5 bar. It can be clearly seen that the performance was exceptional after 20 laundry cycles.

**Table 6 showing the performance rating on polypropylene**

| Example | Spray Test Results after Laundry Cycles @ 40 °C | | | | |
|---|---|---|---|---|---|
| | 0 | 1 | 5 | 10 | 20 |
| 15 | 0 | 100 | 95 | 100 | 100 |
| 16 | 0 | 100 | 100 | 90 | 100 |
| Archroma Smart Repel Hydro PM | 0 | 90 | 100 | 90 | 80 |

Example 15 employs the composition of Table 5 and Example 16 additionally contains wetting agent (0.1 %).

Table 7 shows performance tests with emulsions according to the present invention comprising organic acids which were applied via pad Application on polyester. The cure time was 300 seconds at 150°C and 180 seconds at 160°C, the cure temperature 150 °C (unless otherwise specified), pad application speed of 5 m/min and a pad application pressure of 1.5 bar. It can be seen that a higher application temperature of 160°C and the presence of wetting agent has no impact on overall durability

**Table 7 showing the performance rating on polyester samples**

| Example | Spray Test Results after Laundry Cycles @ 40 °C | | | | |
|---|---|---|---|---|---|
| | 0 | 1 | 5 | 10 | 20 |
| 17 | 0 | 100 | 100 | 100 | 100 |
| 18 | 0 | 90 | 100 | 100 | 100 |
| 19 (coated at 160 °C) | 0 | 100 | 100 | 100 | 100 |
| 20 (coated at 160 °C) | 0 | 100 | 100 | 100 | 90 |
| Archroma Smart Repel Hydro PM | 100 | 100 | 100 | 100 | 90 |

Examples 17 and 19 employ the composition of Table 5 and Examples 18 and 20 additionally contain wetting agent (0.1 %).

### Comparative Example: Concentrate System Development

Table 8 shows comparative examples that were prepared utilising the balance of the anionic and non-ionic surfactant systems to create (a) a 40 % concentrate, (b) stable emulsified systems and (c) performance after initial coating application. The preferred method of synthesis is through the inversion point method whereby the surfactants are dissolved in half of the oil (C8) followed by shear mixing for a period of 5 minutes. The remaining oil is added slowly under high shear until a gel is formed. The remaining ingredients are then added slowly, under shear, until the inversion point is reached as noticeable by a significant decrease in viscosity of the system .

**Table 8: Amounts are in wt.-%, wherein the sum is 100 wt.-%**

| Example | Water | C8 | SLS | Span 60 (sorbitan monostearate) | Span 65 (sorbitan tristearate) | Tween 60 (polyoxy ethyelne sorbitan monostearate) | Sodium Bicarbonate | Observation |
|---|---|---|---|---|---|---|---|---|
| 21 | 57.2 | 40 | 0.2 | 2.8 | 0 | 0 | 0.8 | Stable emulsion |
| 22 | 57.2 | 40 | 0.2 | 0 | 2.8 | 0 | 0.8 | Stable emulsion |
| 23 | 57.3 | 40 | 0.2 | 0 | 2 | 0.5 | 0.8 | Stable emulsion |

### Up-Formulation for coating application:

The concentrates, as displayed in Table 8, were further up-formulated prior to application. Table 9 shows the diluted formulation details that were prepared and subsequently coated and tested on polyester (Table 10)

**Table 9 highlighting dilution levels for all of the sample displayed in Table 8**

| Components | Wt.-% |
|---|---|
| Concentrate Table 8 | 12.5 |
| Extender | 1.5 |
| Acetic Acid | 1.0 |
| Deionised Water | 85.5 |

Table 10 shows performance tests with emulsions according, as formulated Table 9, to the present invention comprising organic acids and Baygard 40178 (extender), which were applied via Pad Application on polyester. The cure time was always 300 seconds with a cure temperature of 160 °C. It can clearly be seen by altering the surfactant system to contain a lower amount of the sodium lauryl sulfate that 0 wash performance (i.e. performance after 0 wash cycles, i.e. directly after treatment/application) is obtainable. This is most prominent for sample 22 which contains Span 65 (sorbitan tristearate).

**Table 10**

| | Wash Cycles | | | |
|---|---|---|---|---|
| Sample | 0 | 1 | 5 | 10 |
| 21 | 80 | 100 | 100 | 100 |
| 22 | 90 | 100 | 100 | 100 |
| 23 | 80 | 100 | 100 | 100 |

## Claims

1. Aqueous silane emulsion, comprising
a) at least one hydrolysable silane having the general formula (I):
R¹-Si-(OR²)₃ (I),
wherein
R¹ is an C₂-C₁₂, preferably C₄-C₁₀, more preferably C₇-C₉, most preferably Cs, alkyl group which can be optionally substituted with one or more groups independently selected from F, Cl, Br, I or OH, preferably it is unsubstituted; and
R² is independently selected from an C₁-C₈, preferably C₁-C₄, more preferably C₂, alkyl group which can be optionally substituted with one or more groups independently selected from F, Cl, Br, I or OH, preferably it is unsubstituted;
b) at least one anionic surfactant, preferably having an HLBd value of 1 to 40, preferably 18 to 40, most preferably 40, most preferably which comprises or is sodium lauryl sulfate;
c) optionally at least one non-ionic surfactant, preferably having an HLBg value of 1 to 20, more preferably 2 to 10;
d) optionally at least one acid;
e) optionally at least one additive; and
f) the remainder being water; wherein
preferably the sum of a) to f) is 100 wt.-%.

2. The aqueous silane emulsion according to claim 1, wherein
a) is present in 2 to 10 wt.-%, preferably 5 to 6 wt.-%, based on the total weight of the aqueous silane emulsion and/or a) comprises, preferably is, octyltriethoxysilane.

3. The aqueous silane emulsion according to claim 1 or 2, wherein
b) is present in 0.01 to 0.2 wt.-%, preferably 0.02 to 0.2 wt.-%, more preferably 0.025 to 0.2 wt.-% based on the total weight of the aqueous silane emulsion.

4. The aqueous silane emulsion according to any one of claims 1 to 3, wherein the at least one acid d) is an organic acid, preferably having a pKa of 1.3-5.0, more preferably selected from acetic acid, para-toluenesulfonic acid, benzenesulfonic acid, camphorsulfonic acid, malic acid, maleic acid, glyoxylic acid, citric acid, formic acid, pyruvic acid, tartaric acid, phthalic acid, acetylsalicylic acid, salicylic acid, lactic acid, dihydroxy fumaric acid, mandelic acid, malonic acid, glycolic acid and oxalic acid or combinations thereof and/or is present in 0.5 to 1.5 wt.-%, preferably 1 to 1.5 wt.-%, most preferably 1 wt.-%, based on the total weight of the aqueous silane emulsion.

5. The aqueous silane emulsion according to any one of claims 1 to 4, wherein the at least one further additive e) is selected from defoamer, buffering agents like sodium bicarbonate, amino silicones, wetting agents, crosslinking agents, extenders or combinations thereof and/or is present in 0.1 to 2.5wt.-%, preferably 0.1 to 2 wt.-%, more preferably in 0.1 to 1.8wt.-%, based on the total weight of the aqueous silane emulsion.

6. The aqueous silane emulsion according to any one of claims 1 to 5, wherein at least 70 wt.-%, preferably 80 to 90 wt.-%, more preferably 88 to 90 wt.-%, of water is present, based on the total weight of the aqueous silane emulsion.

7. The aqueous silane emulsion according to any one of claims 1 to 6, wherein the average droplet size is 10 to 150, preferably 30 to 60 nm and/or the pH-value is from 1 to 6.9, preferably 2 to 6, more preferably 3 to 5.8.

8. The aqueous silane emulsion according to any one of claims 1 to 7, wherein c) is present in 0.01 to 1.0 wt.-%, preferably 0.02 to 0.5 wt.-%, more preferably 0.1 to 0.5 wt.-%, based on the total weight of the aqueous silane emulsion and/or is selected from sorbitan esters and polyethoxylated sorbitan esters.

9. The aqueous silane emulsion according to claim 1, wherein the aqueous silane emulsion is a concentrate, wherein
(1) a) is present in 10 to 40 wt.-%, preferably 18 to 40 wt.-%, based on the total weight of the concentrate;
(2) b) is present in 0.02 to 2.0 wt.-%, preferably 0.04 to 2.0 wt.-%, more preferably 0.05 to 2.0 wt.-% based on the total weight of the concentrate;
(3) c) is present in 0.2 to 2.8 wt.-%, preferably 0.3 to 2.8 wt.-%, more preferably 0.35 to 2.8 wt.-%, based on the total weight of the concentrate; and/or
(4) f) is present in at least 40 wt.-%, preferably 50 to 70 wt.-%, more preferably at least 60 wt.-%, most preferably 55 to 58 wt.-% based on the total weight of the concentrate; and/or
(5) the concentrate emulsion has a pH-value of from 1 to 7.5, preferably 2 to 7, more preferably 6 to 7.

10. A textile comprising a coating obtainable by impregnating the textile with the aqueous silane emulsion according to any one of claims 1 to 9.

11. Use of the aqueous silane emulsion according to any one of claims 1 to 9 for treating textiles, preferably polyamide, polypropylene or polyester textiles, more preferably polyester textiles, to obtain a water repellent coating on the textiles.

12. Method of impregnating a textile, preferably a polyamide, polypropylene or polyester textile, more preferably a polyester textile, with an aqueous silane emulsion according to any one of claims 1 to 9, comprising the steps:
i) applying the aqueous silane emulsion via pad application onto the textile;
ii) curing the treated textile obtained in step i).

13. The method of claim 12, wherein
the application speed of step i) is 0.5 m/min to 30 m/min, preferably 1 m/min to 30m/min, and/or the pressure used to apply the aqueous silane emulsion is 1 to 6 bar, preferably 1.5 to 3.5 bar.

14. The method of claim 12 or 13, wherein the curing temperature of step ii) is 130 to 170 °C, preferably 150 to 160°C.
